Europäisches Patentamt

European Patent Office

Office européen des brevets

(19)

(11) **EP 0 954 802 B1**

(12) **EUROPÄISCHE PATENTSCHRIFT**

(45) Veröffentlichungstag und Bekanntmachung des Hinweises auf die Patenterteilung:
**13.06.2001 Patentblatt 2001/24**

(21) Anmeldenummer: **98907836.5**

(22) Anmeldetag: **21.01.1998**

(51) Int Cl.$^7$: **G06F 17/00**

(86) Internationale Anmeldenummer:
**PCT/DE98/00173**

(87) Internationale Veröffentlichungsnummer:
**WO 98/32079 (23.07.1998 Gazette 1998/29)**

(54) **VERFAHREN ZUR DETEKTION VON SYNCHRONIZITÄT ZWISCHEN MEHREREN DIGITALEN PHYSIKALISCHEN MESSREIHEN MIT HILFE EINES RECHNERS**

METHOD FOR DETECTING SYNCHRONICITY BETWEEN SEVERAL DIGITAL PHYSICAL MEASUREMENT SERIES WITH THE AID OF A COMPUTER

PROCEDE POUR LA DETECTION PAR ORDINATEUR DE LA SYNCHRONICITE ENTRE PLUSIEURS SERIES DE MESURES NUMERIQUES PHYSIQUES

(84) Benannte Vertragsstaaten:
**AT DE GB NL**

(30) Priorität: **21.01.1997 DE 19701931**

(43) Veröffentlichungstag der Anmeldung:
**10.11.1999 Patentblatt 1999/45**

(73) Patentinhaber:
- **SIEMENS AKTIENGESELLSCHAFT**
  **80333 München (DE)**
- **Max-Planck-Gesellschaft zur Förderung der Wissenschaften e.V.**
  **80539 München (DE)**

(72) Erfinder:
- **DECO, Gustavo**
  **D-80636 München (DE)**
- **MARTIGNON, Laura**
  **D-81667 München (DE)**

(74) Vertreter: **Zedlitz, Peter, Dipl.-Inf. et al**
**Patentanwalt,**
**Postfach 22 13 17**
**80503 München (DE)**

(56) Entgegenhaltungen:
**US-A- 4 844 086**

- **MARTIGNON L ET AL: "Learning exact patterns of quasi-synchronization among spiking neurons from data on multi-unit recordings" PROCEEDINGS OF THE 1996 CONFERENCE, ADVANCES IN NEURAL INFORMATION PROCESSING SYSTEMS 9. PROCEEDINGS OF THE 1996 CONFERENCE, DENVER, CO, USA, 2-5 DEC. 1996, ISBN 0-262-10065-7, 1997, LONDON, UK, MIT PRESS, UK, Seiten 76-82, XP002064968**
- **DECO G ET AL: "TRAINING DATA SELECTION BY DETECTING PREDICTABILITY IN NON-STATIONARY TIME SERIES BY A SURROGATE-CUMULANT BASED APPROACH" PROCEEDINGS INTERNATIONAL WORKSHOP ON NEURAL NETWORKS FOR IDENTIFICATION, CONTROL, ROBOTICS, AND SIGNAL/IMAGE PROCESSING, 21.August 1996, Seiten 11-19, XP000676844**
- **TEICH M C ET AL: "TEMPORAL CORRELATION IN CAT STRIATE-CORTEX NEURAL SPIEK TRAINS" IEEE ENGINEERING IN MEDICINE AND BIOLOGY MAGAZINE, Bd. 15, Nr. 5, September 1996, Seiten 79-87, XP000625354**
- **MARTIGNON L ET AL: "Detecting and measuring higher order synchronization among neurons: a Bayesian approach" ARTIFICIAL NEURAL NETWORKS - ICANN 96. 1996 INTERNATIONAL CONFERENCE PROCEEDINGS, ARTIFICIAL NEURAL NETWORKS - ICANN 96, BOCHUM, GERMANY, 16-19 JULY 1996, ISBN 3-540-61510-5, 1996, BERLIN, GERMANY, SPRINGER-VERLAG, GERMANY, Seiten 401-407, XP002065030**

**Beschreibung**

Verfügt man über durch Zeitreihen gegebene Meßdaten, die beispielsweise von unterschiedlichen Neuronen stammen, so ist von großem Interesse, mit welcher Wahrscheinlichkeit Synchronizität zwischen den unterschiedlich möglichen Kombinationen der binären Signale der Zeitreihen auftritt.

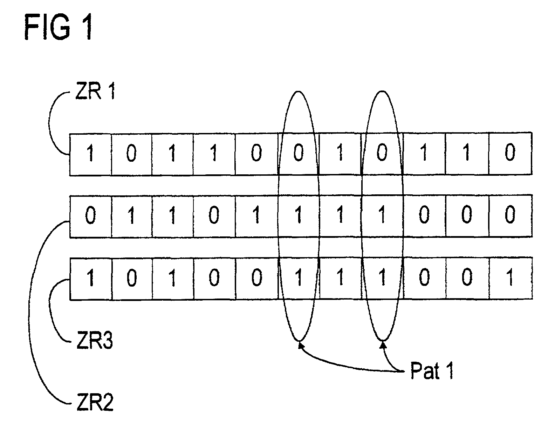

Zur Veranschaulichung diene Figur 1. Hier sind beispielhaft drei Zeitreihen ZR1, ZR2 und ZR3 angeführt. Diese Zeitreihen können beispielsweise von unterschiedlichen Neuronen stammen oder allgemein beliebige binäre Frequenzdaten darstellen. Als Ordnung O werde definiert, wie viele Zeitreihen für die Synchronizität berücksichtigt werden. In Figur 1 ist die Ordnung O gleich 3. Es soll also für alle möglichen Kombinationen von den im Beispiel vorkommenden binären Gruppierungen der Ordnung 3 jeweils eine Wahrscheinlichkeit für Synchronizität angegeben werden. So ist in Figur 1 beispielhaft eine Kombination Pat1 (011) aufgeführt, die zweimal vorkommt.

In Martignon et al., "Learning exact patterns of quasi-synchronization among spiking neurons form data on multi-unit recordings", Proc. of the 1996 conference, Andvances in Neural Information Processing Systems, 9. Proceedings of the 1996 conference, Denver, Co., USA, 2.-5.12.1996, ISBN 0-262-10065-7, 1997, London, UK, Seiten 76-82, wird eine Korrelation der Feuerzeitpunkte von Neuronen diskutiert. Dazu werden ein Frequenzansatz und ein Bayesianischer Ansatz miteinander verglichen.

In Deco et al., "Training data selection by detecting predictability in non-stationary time series by a surrogate-cumulant based approach", Proceedings International Workshop of Neural Networks for Identification, Control, Robotics and Signal/Image Processing (Cat.No.96TB100029), Venice, Italy, 21.-23.08.1996, ISBN 0-8186-7456-3, 1996, Los Alamos, Ca., USA, IEEE Comput. Soc. Press, USA, Seiten 11-19, wird ein nicht-parametrischer, kumulanten-basierter statistischer Ansatz verfolgt, um lineare und nichtlineare Abhängigkeiten in nicht-stationären Zeitreihen zu detektieren. Die statistische Abhängigkeit wird durch Messen der Vorhersagbarkeit ermittelt. Anhand dieser Vorhersagbarkeit wird die Nullhypothese auf statistische Abhängigkeit (angezeigt im Forier-Raum) hin mittels der Surrogat-Methode getestet. Demgemäß ist die Vorhersagbarkeit bestimmt als eine auf einer Kumulanten höherer Ordnung basierende Signifikanz, anhand derer unterschieden wird zwischen den Originaldaten und einem Satz gewürfelter Surrogatdaten, die einer Nullhypothese einer nichtkausalen Beziehung zwischen Vergangenheit und Gegenwart entsprechen.

Die der Erfindung zugrundeliegende **Aufgabe** besteht darin, eine Signifikanz S für die Synchronizität zwischen mehreren digitalen Meßreihen anzugeben.

Diese Aufgabe wird durch das Verfahren gemäß den Merkmalen des Patentanspruchs 1 gelöst.

Das Verfahren formuliert einen nichtparametrischen statistischen Ansatz um Redundanz zwischen mehreren digitalen Meßreihen zu detektieren. Konkret kann es sich dabei um das synchrone Feuern mehrerer Neuronen handeln. Die Synchronizität wird durch die Messung einer diskriminierenden Signifikanz detektiert, die eine Nullhypothese des unabhängigen Feuerns mit einer Surrogat-Methode testet. Die verwendeten Surrogatdaten entsprechen der Nullhypothese einer nichtkausalen Beziehung zwischen dem Feuern oder dem Nichtfeuern mehrerer Neuronengruppen. Eine Ablehnung der Nullhypothese begründet sich auf der Berechnung der diskriminierenden Statistik $\Lambda$ des ursprünglichen Datensatzes und der diskriminierenden Statistik $D_{Si}$ des i-ten Surrogat-Datensatzes, der unter Annahme der Nullhypothese erzeugt wurde.

Wie oben erwähnt, kann eine beispielhafte Weiterbildung des erfindungsgemäßen Verfahrens ein den Meßreihen zugrundeliegendes Feuern mehrerer Neuronen, deren Anzahl die Ordnung O bestimmt, sein. Somit kann mit dem erfindungsgemäßen Verfahren das schwierige Problem der Detektion von neuronalen Kodierungsmustern im Gehirn gelöst werden.

Eine Weiterbildung des erfindungsgemäßen Verfahren ergibt sich aus dem abhängigen Anspruch.

Es zeigen

Figur 1     beispielhaft Meßdaten verschiedener Zeitreihen,
Figur 2     ein Blockdiagramm, das die Schritte des erfindungsgemäßen Verfahrens darstellt.

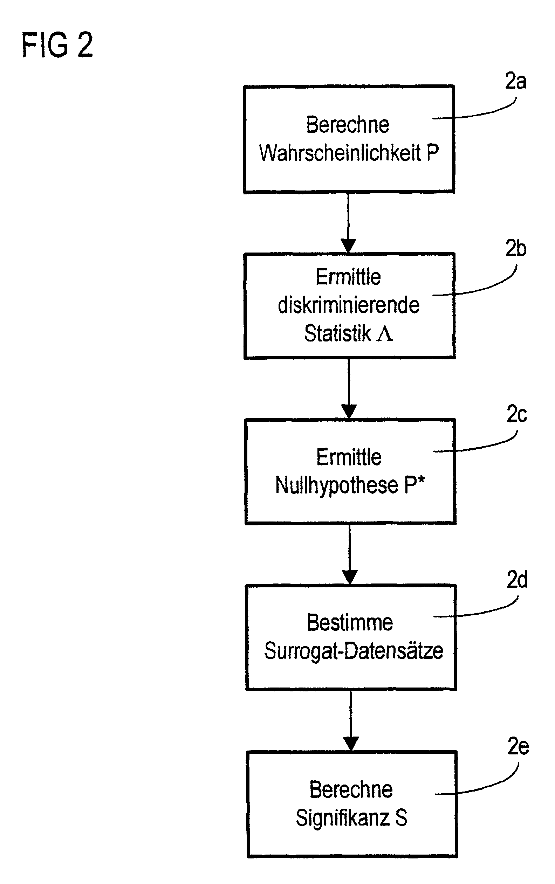

In Figur 1 sind beispielhaft drei unterschiedliche Zeitreihen ZR1, ZR2 und ZR3 angegeben. Allgemein ist die Ordnung O bestimmt durch die maximal vorkommende Anzahl von '1'. Bezogen auf ein Anwendungsbeispiel kann man sich die '1' vorstellen als das Feuern eines Neurons. Allgemein gibt es $2^O$ unterschiedliche Kombinationen bei O binären Meßreihen. Im Beispiel ist die Ordnung gleich drei und es gibt acht verschiedene binäre Kombinationen. Dieses in Figur 1 dargestellte Beispiel wird zur Erklärung des erfindungsgemäßen Verfahrens in Figur 2 aufgegriffen.

Figur 2 stellt ein Blockdiagramm dar, das die einzelnen Schritte des erfindungsgemäßen Verfahrens enthält. Anhand verschiedener Meßreihen, die von Neuronen stammen können, wird eine reale Auftrittswahrscheinlichkeit für jede verschiedene binäre Kombination errechnet (siehe Schritt 2a). Diese Wahrscheinlichkeit P ergibt sich zu

$$P_j = \frac{K_j}{S(K)} \; \forall_j \tag{2},$$

wobei

j       jeweils eine mögliche binäre Kombination,
$K_j$       eine Häufigkeit des Auftretens einer möglichen binären Kombination j der betrachteten Ordnung und
S(K)       eine Anzahl der Werte der Meßreihe

bezeichnen.

Bezogen auf das in Figur 1 dargestellte Beispiel bedeutet dies die Berechnung der Wahrscheinlichkeit P für alle möglichen binären Kombinationen der entsprechenden Ordnung, also für die Tripel

$$\{(000), (001), (010), (011), (100), (101), (110), (111)\} \tag{3}.$$

Eine diskriminierende Statistik $\Lambda$ ergibt sich aus [1] zu (siehe Fig.2, Schritt 2b):

$$\Lambda = R(x, z|y) - R(x, z) \; , \tag{4}$$

wobei

R(..)       eine Redundanz,
x,y,z       Tupel der Ordnung i bestehend aus Werten der Meßreihen

bezeichnen.

Die hier angegebene Formel (4) kann sinngemäß für diskriminierende Statistiken höherer Ordnung erweitert werden.

Die Nullhypothese P* wird in Schritt 2c bestimmt gemäß

$$P^*(1_A) = P(1_A) + (-1)^{|A|} \cdot w, \tag{5}$$

mit

$$1_A(i) = \begin{cases} 0 & \text{wenn } i \notin A \\ 1 & \text{wenn } i \in A \end{cases} \tag{5a},$$

wobei

w       eine Störungsvariable,
A       eine Menge, die die Anordnung von binären Daten in einem Tupel, dessen Ordnung bestimmt ist durch die maximal vorkommende Anzahl von '1' und
|A|       die Mächtigkeit der Menge A

bezeichnen,

Zur Erläuterung obiger Formel (4) sei erwähnt, daß bei ungerader Anzahl von '1' in dem Tupel das Vorzeichen negativ, ansonsten positiv ist.

Im Folgenden wird die Störungsvariable w bestimmt, so daß die diskriminierende Statistik $\Lambda$ von der Nullhypothese Null ergibt, also

$$\Lambda(P^*) = 0 \; (6), \tag{6},$$

unter der Bedingung, daß die Störungsvariable w in einem Bereich

$$w_{min} < w < w_{max} \qquad (7a)$$

liegt, wobei dabei die Bedingung

$$0 < P^*(1_A) < 1 \; \forall \; A \qquad (7b)$$

einzuhalten ist. Es bezeichnet $1_A$ alle möglichen Permutationen von '1' in einem Tupel mit der Mächtigkeit $|A|$. Zusätzlich werde eine Nebenbedingung gemäß der Summe aller Auftrittswahrscheinlichkeiten der Nullhypothese gestellt:

$$\sum_A P^*(1_A) = 1 \qquad (8).$$

Anhand der Nullhypothese $P^*$ werden Surrogat-Datensätze, also beliebige Instanzen der Vorschrift der Nullhypothese, per Zufallsgenerator ermittelt (Schritt 2d). Anders ausgedrückt werden Meßreihen "gewürfelt", wobei der "Würfel" für jede mögliche Kombination die durch die Nullhypothese festgelegte Auftrittswahrscheinlichkeit hat.
Zur Entscheidung, ob Synchronizität vorliegt oder nicht, wird eine Signifikanz S bestimmt (Schritt 2e):

$$S = \frac{|\Lambda - \mu_s|}{\sigma_S} \qquad (9)$$

mit

$$\mu_S = \frac{1}{N} \cdot \sum_{i=1}^{N} D_{S_i} \qquad (10a)$$

und

$$\sigma_S = \sqrt{\frac{1}{N} \cdot \sum_{i=1}^{N} \left( D_{S_i} - \mu_S \right)^2} \qquad (10b)$$

wobei

$D_{S_i}$   die diskriminierende Statistik eines i-ten Surrogat-Datensatzes, der von der Nullhypothese erzeugt wurde,
$\mu_S$   einen geschätzten Mittelwert der diskriminierenden Statistik des Surrogat-Datensatzes,
$\sigma_S$   eine geschätzte Varianz der diskriminierenden Statistik des Surrogat-Datensatzes und
$N$   eine Länge des Surrogat-Datensatzes

bezeichnen.
Eine vorteilhafte Anwendung des erfindungsgemäßen Verfahrens besteht, wie oben erwähnt, in der Verwendung von Meßreihen, die dem Feuern realer Neuronen zugrunde liegen. Das Verfahren kann gleichermaßen auf beliebige binäre Frequenzdaten angewandt werden.

EP 0 954 802 B1

Im Rahmen dieses Dokuments wurde folgende Veröffentlichung zitiert:
[1] Cover, T.M.: Elements of Information theory. John Wiley & Sons 1976, S.18-23, ISBN 0-471-06259-6

**Patentansprüche**

1. Verfahren zur Detektion von Synchronizität zwischen mehreren digitalen physikalischen Meßreihen mit Hilfe eines Rechners,

  a) bei dem eine Ordnung die Anzahl der berücksichtigten Meßreihen angibt, die auf Synchronizität hin untersucht werden;
  b) bei dem eine Auftrittswahrscheinlichkeit Pj für verschiedene binäre Kombinationen $K_j$ berechnet wird gemäß

  $$P_j = \frac{K_j}{S(K)} \; \forall \, j,$$

  wobei

  $j$      jeweils eine mögliche binäre Kombination,
  $K_j$      eine Häufigkeit des Auftretens einer möglichen binären Kombination j der betrachteten Ordnung,
  $S(K)$      eine Anzahl der Werte der Meßreihe

  bezeichnen;
  c) bei dem eine diskriminierende Statistik A abhängig von der in Merkmal a) angegebenen Ordnung bestimmt wird;
  d) bei dem eine Nullhypothese (P*) derart angenommen wird, daß gilt

  $$P^*(1_A) = p(1_A) + (-1)^{|A|} \cdot w,$$

  mit

  $$1_A(i) = \begin{cases} 0 \text{ wenn } i \notin A \\ 1 \text{ wenn } i \in A \end{cases},$$

  wobei

  $w$      eine Störungsvariable;
  $A$      eine Menge, die die Anordnung von binären Daten in einem Tupel, dessen Ordnung bestimmt ist durch die maximal vorkommende Anzahl von '1' und
  $|A|$      die Mächtigkeit der Menge A

  bezeichnen,
  e) bei dem die Störungsvariable w gesucht wird, so daß gilt

  $$\Lambda(P^*) = 0,$$

  wobei
  $w_{min}$ und $w_{max}$ so definiert sind, daß gilt

  $$0 < P^*(1_A) < 1 \; \forall \, A$$

5

mit der Nebenbedingung

$$\sum_A P^*(1_A) = 1 \; ;$$

f) bei dem Surrogat-Datensätze, also beliebige Instanzen der Vorschrift der Nullhypothese P* ermittelt werden,

g) bei dem zur Entscheidung, ob Synchronizität vorliegt oder nicht, eine Signifikanz S bestimmt wird gemäß

$$S = \frac{|\Lambda - \mu_S|}{\sigma_s}$$

mit

$$\mu_S = \frac{1}{N} \cdot \sum_{i=1}^{N} D_{S_i} \quad und \quad \sigma_S = \sqrt{\frac{1}{N} \cdot \sum_{i=1}^{N} \left(D_{S_i} - \mu_S\right)^2} \; ,$$

wobei

| | |
|---|---|
| $D_{S_i}$ Surrogat-Datensatzes, der von der | die diskriminierende Statistik eines i-ten Nullhypothese erzeugt wurde, |
| $\mu_S$ | einen geschätzten Mittelwert der diskriminierenden Statistik des Surrogat-Datensatzes, |
| $\sigma_S$ | eine geschätzte Varianz der diskriminierenden Statistik des Surrogat-Datensatzes und |
| N | eine Länge des Surrogat-Datensatzes bezeichnen. |

2. Verfahren nach Anspruch 1,
bei dem als Meßdaten Zeitreihen von unterschiedlichen
Neuronen verwendet werden.

**Claims**

1. Method for detecting synchronicity between a plurality of digital physical measurement series with the aid of a computer,

a) in which an order specifies the number of measurement series under consideration which are being investigated for synchronicity;
b) in which a probability of occurrence $P_j$ is calculated for various binary combinations $K_j$ in accordance with

$$P_j = \frac{K_j}{S(K)} \; \forall \, j,$$

where

j denotes a possible binary combination, in each case,
$K_j$ denotes a frequency of the occurrence of a possible binary combination j of the order under consideration,

S(K)    denotes a number of values of the measurement series;

c) in which a discriminating statistic A is determined as a function of the order specified in feature a);
d) in which a null hypothesis (P*) is assumed in such a way that it holds that

$$P^*(1_A) = P(1_A) + (- 1)^{|A|} \cdot w.$$

where

$$1_A(i) \; = \; \begin{cases} 0 \; \text{if} \; i \notin A \\ 1 \; \text{if} \; i \in A \end{cases}$$

where

w       denotes an interference variable,
A       denotes a set which [lacuna] the arrangement of binary data in a tuple whose order is determined by
        the maximum number of "1" occurring and
|A|     denotes the manyness of the set A

e) in which the interference variable w is searched for so that it holds that

$$\Delta (P^*) = 0,$$

where
$w_{min}$ and $w_{max}$ are defined so that it holds that

$$0 < P^* (1_A) < 1 \; \forall \; A$$

with the secondary condition that

$$\sum_A P^*(1_A) \; = \; 1;$$

f) in which surrogate data records, that is to say arbitrary instances of the rule of the null hypothesis P*, are
determined, and
g) in which, in order to decide whether synchronicity is present or not, a significance S is determined in accordance with

$$s = \frac{|\Delta - \mu_s|}{\sigma_s}$$

where

$$\mu_s \; = \; \frac{1}{N} \cdot \sum_{i=1}^{N} D_{si} \; \text{ and } \; \sigma_s \; = \; \sqrt{\frac{1}{N} \cdot \sum_{i=1}^{N} (D_{si} - \mu_s)^2} \; ,$$

where

$D_{Si}$    denotes the discriminating statistic of an ith surrogate data record which was generated by the null

hypothesis,

μ$_S$   denotes an estimated mean value of the discriminating statistic of the surrogate data record,

as   denotes an estimated variance of the discriminating statistic of a surrogate data record, and

N   denotes a length of surrogate data record.

**2.** Method according to Claim 1, in which a series of different neurons are used as measured data.

**Revendications**

**1.** Procédé de détection d'une synchronicité entre plusieurs séries de mesures numériques physiques à l'aide d'un ordinateur,

a) dans lequel un ordre indique le nombre des séries de mesures prises en compte, pour lesquelles on recherche une synchronicité ;

b) dans lequel on calcule une probabilité P$_j$ d'apparition pour diverses combinaisons K$_j$ binaires suivant

$$P_i = \frac{K_j}{S(K)} \;\; \forall j,$$

j   étant chaque fois une combinaison binaire possible,

K$_j$   étant une fréquence de l'apparition d'une combinaison j binaire possible de l'ordre considéré,

S(K)   étant un nombre des valeurs de la série de mesures ;

c) dans lequel on détermine une statistique A discriminante en fonction de l'ordre indiqué à la disposition a) ;

d) dans lequel on fait l'hypothèse d'une hypothèse (P*) nulle de telle manière que :

$$P^*(1_A) = P(1_A ) + (-1)^{|A|} \cdot w,$$

avec

$$1_A(i) = \begin{cases} 0 \text{ si } i \notin A \\ 1 \text{ si } i \in A \end{cases}$$

w   désignant une variable parasite ;

A   désignant une quantité qui désigne la disposition de données binaires dans une séquence ordonnée dont l'ordre est déterminé par le nombre maximum de "1" apparaissant, et

|A|   désignant le nombre cardinal de la quantité A,

e) dans lequel on recherche la variable w parasite, de sorte que l'on ait

$$\Lambda(P^*) = 0,$$

W$_{min}$ et w$_{max}$ étant définis de telle manière que :

$$0 < P^*(1_A) < 1 \;\; \forall A$$

avec la condition secondaire

$$\sum_{A} P*(1_A) = 1;$$

f) dans lequel on détermine des ensembles de données d'équivalence, donc des instances quelconques de la prescription de l'hypothèse P* nulle,

g) dans lequel on détermine une signification S pour décider s'il est présent ou non une synchronicité suivant

$$S = \frac{|\Lambda - \mu_s|}{\sigma_s}$$

avec

$$\mu_s = \frac{1}{N} \cdot \sum_{i=1}^{N} D_{Si} \quad et \quad \sigma_S = \sqrt{\frac{1}{N} \cdot \sum_{i=1}^{N} (D_{Si} - \mu_s)^2},$$

$D_{Si}$ désignant la statistique discriminante d'un ième ensemble de données d'équivalence qui a été produit par l'hypothèse nulle

$\mu_s$ désignant une valeur moyenne estimée de la statistique discriminante de l'ensemble de données d'équivalence,

$\sigma_s$ désignant une variante estimée de la statistique discriminante de l'ensemble de données d'équivalence et

N désignant une longueur de l'ensemble de données d'équivalence.

2. Procédé suivant la revendication 1, dans lequel on utilise comme donnée de mesure des séries temporelles de neurones différents.

# FIG 1

ZR 1

| 1 | 0 | 1 | 1 | 0 | 0 | 1 | 0 | 1 | 1 | 0 |
|---|---|---|---|---|---|---|---|---|---|---|

| 0 | 1 | 1 | 0 | 1 | 1 | 1 | 1 | 0 | 0 | 0 |
|---|---|---|---|---|---|---|---|---|---|---|

| 1 | 0 | 1 | 0 | 0 | 1 | 1 | 1 | 0 | 0 | 1 |
|---|---|---|---|---|---|---|---|---|---|---|

ZR3

Pat 1

ZR2

# FIG 2

Berechne
Wahrscheinlichkeit P — 2a

Ermittle
diskriminierende
Statistik $\Lambda$ — 2b

Ermittle
Nullhypothese P* — 2c

Bestimme
Surrogat-Datensätze — 2d

Berechne
Signifikanz S — 2e